# EUROPEAN PATENT APPLICATION

(11) **EP 3 722 366 A1**
(43) Date of publication of application: **14.10.2020**
(21) Application number: 18886896.2
(22) Date of filing: 31.10.2018
(51) Int. Cl.: C08L 23/22, B60C 5/14, C08K 3/04, C08K 3/36, C08K 7/00, C08L 45/00

(54) **RUBBER COMPOSITION, INNER LINER RUBBER, AND TIRE**

(30) Priority: 08.12.2017 JP 2017236200
(71) Applicant: Bridgestone Corporation, Tokyo 104-8340 (JP)
(72) Inventor: SUZUKI, Shoko, Tokyo 104-8340 (JP); URATA, Tomohiro, Tokyo 104-8340 (JP)
(74) Representative: Oxley, Robin John George
(86) International application number: PCT/JP2018/040432
(87) International publication number: WO 2019/111598

(57) **Abstract**

The present invention relates to a rubber composition including a rubber component, a reinforcing filler containing a reinforcing filler A and a reinforcing filler B, a layered or platy mineral having an aspect ratio of 3 to 30, and a resin having a glass transition temperature of 41 to 75°C, wherein the reinforcing filler A is carbon black having a nitrogen adsorption specific surface area of less than 50 m²/g, and the reinforcing filler B is carbon black having a nitrogen adsorption specific surface area of 100 m²/g or more or silica having a nitrogen adsorption specific surface area of 100 m²/g or more, the rubber composition being able to produce a vulcanized rubber having excellent gas barrier properties and low-temperature durability.

## Description

### Technical Field

The present invention relates to a rubber composition, an inner liner rubber, and a tire.

### Background Art

In order to maintain an air pressure of a tire over a long period of time, an inner liner of the tire is required to have air permeation resistance, and it is also required to have crack resistance such that even when receiving repetitive bending deformation, a crack is not generated. Among a variety of rubbers, butyl-based rubbers which are excellent in air permeation resistance have hitherto been used for the inner liner. Meanwhile, in recent years, functional resin films are developed, and there are a lot of resin films which are more excellent in gas barrier properties than the butyl-based rubbers.

For example, PTL 1 discloses a rubber composition for inner liner in which by using a butyl-based rubber as a rubber component and mixing, as a filler, a combination of a clay having a mean aspect ratio of 3 to less than 30 and carbon black in a specified ratio, sufficient dispersibility is secured, and low air retention, bending resistance, and low temperature properties are realized over the entire rubber composition.

In addition, PTL 2 discloses a rubber composition for inner liner containing, as a rubber component, a blend rubber of a butyl-based rubber and a diene-based rubber, in which different specified fillers are unevenly distributed in the respective rubbers, thereby realizing both crack resistance and airtightness at low temperatures.

### Citation List

### Patent Literature

PTL 1: JP 2002-88206 A
PTL 2: JP 9-316256 A

### Summary of Invention

### Technical Problem

A problem of the present invention is to provide a rubber composition capable of producing a vulcanized rubber having excellent gas barrier properties and low-temperature durability; and an inner liner rubber and a tire each having excellent gas barrier properties and low-temperature durability.

### Solution to Problem

<1> A rubber composition including a rubber component, a reinforcing filler containing a reinforcing filler A and a reinforcing filler B, a layered or platy mineral having an aspect ratio of 3 to 30, and a resin having a glass transition temperature of 41 to 75°C, wherein the reinforcing filler A is carbon black having a nitrogen adsorption specific surface area of less than 50 m²/g, and the reinforcing filler B is carbon black having a nitrogen adsorption specific surface area of 100 m²/g or more or silica having a nitrogen adsorption specific surface area of 100 m²/g or more.
<2> The rubber composition as set forth in <1>, wherein the rubber component contains 80% by mass or more of a modified or unmodified butyl rubber.
<3> The rubber composition as set forth in <1> or <2>, wherein the resin is at least one selected from the group consisting of a dicyclopentadiene-based resin and a hydrogenated C9-based resin.
<4> The rubber composition as set forth in any one of <1> to <3>, wherein as a vulcanized rubber characteristic, an elongation at break at -40°C is 330% or more.
<5> An inner liner rubber, which is obtained from the rubber composition as set forth in any one of <1> to <4>.
<6> A tire including the inner liner rubber as set forth in <5>.

### Advantageous Effects of Invention

In accordance with the present invention, a rubber composition capable of producing a vulcanized rubber having excellent gas barrier properties and low-temperature durability; and an inner liner rubber and a tire each having excellent gas barrier properties and low-temperature durability can be provided.

### Description of Embodiments

### <Rubber Composition>

The rubber composition of the present invention includes a rubber component, a reinforcing filler containing a reinforcing filler A and a reinforcing filler B, a layered or platy mineral having an aspect ratio of 3 to 30, and a resin having a glass transition temperature of 41 to 75°C, wherein the reinforcing filler A is carbon black having a nitrogen adsorption specific surface area of less than 50 m²/g, and the reinforcing filler B is carbon black having a nitrogen adsorption specific surface area of 100 m²/g or more or silica having a nitrogen adsorption specific surface area of 100 m²/g or more.

The inner liner of the tire has such a function that it suppresses air permeation within the tire, and even when receiving repetitive bending deformation, it prevents a crack, thereby maintaining an air pressure of the tire over a long period of time.

As in the rubber compositions described in PTLs 1 and 2, one kind of a filler has hitherto been used as the reinforcing filler; however, in this case, a space between reinforcing filler particles was large, so that room for air permeation remained.

In contrast, in the present invention, two or more kinds of reinforcing fillers having a different nitrogen adsorption specific surface area from each other are used. It may be considered that by jointly using large-particle-diameter carbon black having a nitrogen adsorption specific surface area of less than 50 m²/g and small-particle-diameter carbon black or silica having a nitrogen adsorption specific surface area of 100 m²/g or more, the small-particle-diameter carbon black or silica incorporates into a gap between the large-particle-diameter carbon black particles, whereby the gas barrier properties can be enhanced.

It may be considered that in view of the fact that the rubber composition of the present invention further includes a resin having a glass transition temperature of 41 to 75°C, the resulting vulcanized rubber is reinforced, and even when an external load is applied in a low-temperature environment where the temperature reaches -40°C, a crack is hardly generated.

In the light of the above, it may be considered that the rubber composition of the present invention is able to produce a vulcanized rubber having excellent gas barrier properties and low-temperature durability.

The rubber composition of the present invention is hereunder described in detail.

### [Rubber Component]

The rubber composition of the present invention contains a rubber component.

The rubber component is not particularly restricted, and a diene-based rubber may be used, and a non-diene-based rubber may also be used; however, from the viewpoint of gas barrier properties, it is preferred that the rubber component contains a non-diene-based rubber, especially a modified or unmodified butyl rubber (IIR).

Examples of the modified butyl rubber include halobutyl rubbers, such as a chlorobutyl rubber, a bromobutyl rubber, and a rubber resulting from further modification of the foregoing chlorobutyl rubber or bromobutyl rubber.

As the modified butyl rubber, a commercially available product may be used. For example, "ENJAY BUTYL HT10-66", available from Enjay Chemical Company is exemplified as the chlorobutyl rubber; and "BROMOBUTYL 2255" and "BROMOBUTYL 2222", available from Exxon Mobil Corporation are exemplified as the bromobutyl rubber.

The butyl rubber may be used alone or may be used as a blend of two or more thereof.

From the viewpoint of enhancing the gas barrier properties of the vulcanized rubber, such as an inner liner rubber, which is obtained from the rubber composition of the present invention, it is preferred that the rubber component contains 80% by mass or more of a modified or unmodified butyl rubber. The content of the modified or unmodified butyl rubber in the rubber component is more preferably 95% by mass or more, and it may be 100% by mass.

As the diene-based rubber, at least one selected from the group consisting of a natural rubber (NR) and a synthetic diene-based rubber is used.

Specifically, examples of the synthetic diene-based rubber include a polyisoprene rubber (IR), a polybutadiene rubber (BR), a styrene-butadiene copolymer rubber (SBR), a butadiene-isoprene copolymer rubber (BIR), a styrene-isoprene copolymer rubber (SIR), and a styrene-butadiene-isoprene copolymer rubber (SBIR). The diene-based rubber may be used alone or may be used as a blend of two or more thereof.

### [Reinforcing Filler]

The rubber composition of the present invention includes at least two kinds of reinforcing fillers, i.e., a reinforcing filler A and a reinforcing filler B, wherein the reinforcing filler A is carbon black having a nitrogen adsorption specific surface area of less than 50 m²/g, and the reinforcing filler B is carbon black having a nitrogen adsorption specific surface area of 100 m²/g or more or silica having a nitrogen adsorption specific surface area of 100 m²/g or more.

In view of the fact that the rubber composition of the present invention includes these reinforcing fillers, the small-particle-diameter reinforcing filler incorporates into a gap between the large-particle-diameter reinforcing filler particles, whereby not only the gas barrier properties of the vulcanized rubber can be enhanced, but also the crack resistance of the vulcanized rubber can be more enhanced because a contact area between the rubber component and the reinforcing fillers increases.

When the nitrogen adsorption specific surface area of the reinforcing filler A is 50 m²/g or more, or the nitrogen adsorption specific surface area of the reinforcing filler B is less than 100 m²/g, the reinforcing filler B cannot incorporate into a gap between the reinforcing fillers A, so that the gas barrier properties are lowered.

From the viewpoint of enhancing the gas barrier properties of the vulcanized rubber, the nitrogen adsorption specific surface area of the reinforcing filler A is preferably 25 m²/g or more and less than 50 m²/g, and more preferably 30 to 40 m²/g. From the same viewpoint, the nitrogen adsorption specific surface area of the reinforcing filler B is preferably 100 to 300 m²/g, and more preferably 120 to 200 m²/g.

The reinforcing fillers A and B may be each independently used alone or may be used in admixture of two or more thereof.

The reinforcing filler may contain other reinforcing filler than the reinforcing fillers A and B. Examples of the other reinforcing filler include metal oxides, such as alumina and zirconia.

The content of the reinforcing fillers (total content including the reinforcing fillers A and B and the other reinforcing filler) in the rubber composition of the present invention is preferably 30 to 95 parts by mass, and more preferably 40 to 85 parts by mass based on 100 parts by mass of the rubber component.

The content of the reinforcing filler A in the rubber composition of the present invention is preferably 10 to 69 parts by mass, and more preferably 25 to 58 parts by mass based on 100 parts by mass of the rubber component.

The content of the reinforcing filler B in the rubber composition of the present invention is preferably 1 to 20 parts by mass, and more preferably 2 to 15 parts by mass based on 100 parts by mass of the rubber component.

### [Layered or Platy Mineral]

The rubber composition of the present invention includes a layered or platy mineral having an aspect ratio of 3 to 30.

The wordings "aspect ratio of 3 to 30" mean that the shape of the mineral is platy, and the layered mineral also has an aspect ratio of 3 to 30.

When the rubber composition includes the mineral having such a shape, the gas barrier properties of the vulcanized rubber obtained from the rubber composition can be enhanced.

Although the kind of the mineral is not particularly restricted, from the viewpoint of gas barrier properties, it is preferably an inorganic clay mineral. The inorganic clay mineral may be either a natural product or a synthetic product, and examples thereof include kaolin clay, clay, mica, feldspar, and a hydrated composite of silica and alumina. These may be used alone or may be used in combination of two or more thereof.

Of these, from viewpoint of gas barrier properties, a kaolinitic clay and a sericitic clay are preferred.

The content of the aforementioned mineral of the rubber composition is preferably 10 to 50 parts by mass, and more preferably 20 to 40 parts by mass based on 100 parts by mass of the rubber component.

### [Resin]

The rubber composition of the present invention contains a resin having a glass transition temperature (Tg) of 41 to 75°C.

When the glass transition temperature of the resin is lower than 41°C, the gas barrier properties cannot be sufficiently exhibited, and when it is higher than 75°C, the crack resistance at low temperatures cannot be guaranteed. From the viewpoint of high gas barrier properties and crack resistance at low temperatures, the glass transition temperature of the resin is preferably 41 to 75°C. The glass transition temperature of the resin can be measured by the differential scanning calorimetry (DSC).

The resin is not particularly restricted so long as its glass transition temperature is 41 to 75°C, and examples thereof include at least one resin selected from a terpene resin, a phenol resin, a coumarone·indene resin, a xylene resin, a rosin-based resin, an aromatic hydrocarbon resin, an aliphatic hydrocarbon resin, and an alicyclic hydrocarbon resin.

The terpene resin is a resin composed of, as a main component, a terpene polymer or a modified product thereof, and examples thereof include respective series of trade name: "YS RESIN PX", "YS RESIN PXN", "YS RESIN TO", and "YS RESIN TR", available from Yasuhara Chemical Co., Ltd.; and series of trade name: "PICCOLITE", available from Hercules, Inc.

The phenol resin is preferably a novolak-based thermoplastic phenol resin, and examples thereof include series of trade name: "SUMILITERESIN PR", available from Sumitomo Bakelite Co., Ltd.; and trade name: "TAMANOL 501", available from Arakawa Chemical Industries, Ltd.

The coumarone·indene resin is one resulting from polymerization of coumarone, indene, styrene, and so on in coal tar, and examples thereof include coumarone resin series, available from Kobe Oil Chemical Industrial Co., Ltd.

The xylene resin is a resin obtained through condensation of xylene and formaldehyde, or a modified product thereof, and examples thereof include series of trade name: "LIGNOL", available from Lignyte Inc.

Examples of the rosin-based resin include an pentaerythritol ester of rosin, a glycerol ester of rosin, a polymerized rosin, and a hydrogenated rosin.

The aromatic hydrocarbon resin is a petroleum resin produced from a C9 fraction, and examples thereof include series of trade name: "NISSEKI NEOPOLYMER", available from JX Nippon Oil & Energy Corporation; and "ARKON P90", "ARKON P100", and "ARKON P115", available from Arakawa Chemical Industries, Ltd.

The aliphatic hydrocarbon resin is a petroleum resin produced from a C5 fraction, and examples thereof include series of trade name: "ESCOREZ", available from Exxon Mobil Corporation; and series of trade name: "QUINTONE 100", available from Zeon Corporation.

As the alicyclic hydrocarbon resin, a dicyclopentadiene-based resin (DCPD-based resin) produced from, as a main raw material, high-purity dicyclopentadiene resulting from dimerization of cyclopentadiene is preferably used. The dicyclopentadiene-based resin may be a hydrogenated resin resulting through partial or full hydrogenation or may be an unhydrogenated resin.

Suitable examples of the dicyclopentadiene-based resin include "ESCOREZ 8190P", available from Exxon Mobil Corporation; "TD401", "QUINTONE 1105", "QUINTONE 1325", and "QUINTONE 1340", available from Zeon Corporation; and "SU210", available from Kolon Industries, Inc.

Above all, from the viewpoint of an affinity with the butyl rubber, hydrogenated or unhydrogenated dicyclopentadiene-based resin (DCPD-based resin) and C9 resin, and a phenol resin are more preferred; a hydrogenated or unhydrogenated dicyclopentadiene-based resin and a hydrogenated or unhydrogenated C9 resin are still more preferred; and a hydrogenated or unhydrogenated dicyclopentadiene-based resin and a hydrogenated C9 resin are yet still more preferred. The resin may be used alone or may be used in combination of two or more thereof.

From the viewpoint of more enhancing the low-temperature durability of the vulcanized rubber, the content of the resin having a glass transition temperature of 41 to 75°C in the rubber composition is preferably 5 to 25 parts by mass, and more preferably 10 to 20 parts by mass based on 100 parts by mass of the rubber component.

### [Vulcanizer]

It is preferred that the rubber composition of the present invention includes a vulcanizer.

The vulcanizer is not particularly restricted, and typically, sulfur is used. Examples thereof include powdery sulfur, precipitated sulfur, colloidal sulfur, surface-treated sulfur, and insoluble sulfur.

The content of the vulcanizer is preferably 0.1 to 10 parts by mass based on 100 parts by mass of the rubber component. When this content is 0.1 parts by mass or more, the vulcanization can be thoroughly advanced, and when it is 10 parts by mass or less, the aging of the vulcanized rubber, such as an inner liner rubber, can be suppressed.

The content of the vulcanizer in the rubber composition is more preferably 0.2 to 5 parts by mass, and still more preferably 0.4 to 3 parts by mass based on 100 parts by mass of the rubber component.

### [Vulcanization Accelerator]

In order to accelerate the vulcanization of the rubber component, it is preferred that the rubber composition contains a vulcanization accelerator.

Examples of the vulcanization accelerator include a sulfenamide-based vulcanization accelerator, a thiazole-based vulcanization accelerator, a dithiocarbamate-based vulcanization accelerator, a xanthogenate-based vulcanization accelerator, and a thiuram-based vulcanization accelerator. These vulcanization accelerators may be used alone or may be used in combination of two or more thereof.

The content of the vulcanization accelerator in the rubber composition is preferably 0.1 to 10 parts by mass, and more preferably 0.5 to 5 parts by mass based on 100 parts by mass of the rubber component.

The rubber composition of the present invention can contain a blending agent which is blended in and used for a usual rubber composition together with the aforementioned components. Examples thereof include various blending agents which are generally blended, such as a silane coupling agent, a vulcanization acceleration aid, a vulcanization retarder, a softening agent, e.g., various process oils, zinc white, stearic acid, a wax, an antiaging agent, a compatibilizer, a workability improver, a lubricant, a tackifier, a UV absorber, a dispersant, and a homogenizer.

On the occasion of obtaining the rubber composition, a mixing method of the aforementioned respective components is not particularly restricted, and all of the component raw materials may be mixed and kneaded at once, or the respective components may be mixed kneaded in two stages or three stages. On the occasion of kneading, a kneading machine, such as a roll, an internal mixer, and a Banbury mixer, can be used. Furthermore, on the occasion of molding in a sheet form, a belt form, or the like, a known molding machine, such as an extrusion molding machine, and a press machine, may be used.

The vulcanized rubber of the rubber composition as obtained above is excellent in low-temperature durability, and specifically, it has a vulcanized rubber characteristic such that an elongation at break at -40°C is 330% or more. Accordingly, the rubber composition of the present invention is suitable for a tire rubber member receiving repetitive bending deformation, such as an inner liner rubber and a sidewall rubber.

The elongation at break (Eb) of the vulcanized rubber can be measured by a method described in the section of Examples.

### <Inner Liner Rubber and Tire>

The tire of the present invention is produced by a usual method of using the rubber composition of the present invention for an inner liner site. That is, the rubber composition of the present invention obtained by mixing the aforementioned various components according to the needs is processed in an unvulcanized state as a member for inner liner and then molded and processed as an inner liner rubber of tire through a conventional production process. The inner liner rubber can be constituted as a laminate of an inner liner layer and a carcass adjacent layer (a laminate for inner liner), and the rubber composition of the present invention is suitable as an inner liner rubber constitutes the inner liner layer. After molding as a tire, the inner liner layer is vulcanized at a vulcanization temperature of 130°C or higher.

A production method of the tire of the present invention preferably includes a step of laminating other tire member on the laminate for inner liner of tire, to mold a green tire; and a step of vulcanizing the green tire.

In view of the fact that the inner liner rubber of the present invention has excellent gas barrier properties and low-temperature durability, the thickness of the inner liner layer can be made thinner than that in the conventional art.

### Examples

### <Examples 1 to 8 and Comparative Examples 1 to 7>

### [Preparation of Rubber Composition]

Respective components were kneaded in each of mixing compositions shown in the following Tables 1 and 2, to prepare rubber compositions.

Details of the respective components shown in Tables 1 and 2 are as follows.

### (1) Rubber Component

Bromobutyl rubber: "BROMOBUTYL 2222", available from Exxon Mobil Corporation

### (2) Reinforcing Filler

Filler A1: "STERLING V" (nitrogen adsorption specific surface area = 30 m²/g), available from Cabot Corporation
Filler B1 (CB): Carbon black, "VULCAN 7H" (nitrogen adsorption specific surface area = 125 m²/g), available from Cabot Corporation
Filler B2 (silica): Silica (nitrogen adsorption specific surface area = 108 m²/g), obtained by the following production method
Filler C1: "SHO BLACK N326" (nitrogen adsorption specific surface area = 85 m²/g), available from Cabot Corporation

### (Production Method of Filler B2)

In a 180-liter jacketed stainless steel reaction tank provided with an agitator, 65 liters of water and 1.25 liters of a sodium silicate aqueous solution (SiO₂ = 160 g/L, SiO₂/Na₂O molar ratio = 3.3) were charged and then heated at 96°C. A Na₂O concentration of the produced solution was 0.015 mol/L.

While keeping the temperature of this solution at 96°C, a sodium silicate aqueous solution the same as described above at a flow rate of 750 mL/min and sulfuric acid (18 mol/L) at a flow rate 33 mL/min were simultaneously dropped. A neutralization reaction was performed while adjusting the flow rates and also keeping the Na₂O concentration in the reaction solution at a range of 0.005 to 0.035 mol/L. The reaction solution started clouding from the middle, and after elapsing 30 minutes, the viscosity increased, whereby the reaction solution became a gel-like solution. The addition was further continued, and after elapsing 100 minutes, the reaction was terminated. A silica concentration in the produced solution was 85 g/L. Subsequently, sulfuric acid the same as described above was added until a pH of the solution became 3, to obtain a silicic acid slurry. The obtained silicic acid slurry was filtered with a filter press and washed with water, to obtain a wet cake. Subsequently, the wet cake was formed in a slurry by using an emulsification apparatus and then dried with a spray type dryer, to obtain the filler B2.

(3) Mineral: Clay, "ASP NC X-1" (aspect ratio = 20), available from BASF SE
(4) Oil: "SUPER OIL Y22", available from JX Nippon Oil & Energy Corporation
(5) Stearic acid: "Kirijirushi STEARIC ACID", available from NOF Corporation
(6) Zinc white: "ZINC WHITE", available from Hakusui Tech Co., Ltd.
(7) Vulcanization accelerator: Di-2-benzothiazolyl disulfide, "NAUGEX MBTS", available form Uniroyal, Inc.
(8) Sulfur: "HK200-5", available from Tsurumi Chemical Industry Co., Ltd.

### (9) Resin

Resin 1 (DCPD): "ESCOREZ 8190P", available from Exxon Mobil Corporation (Tg = 47.5°C)
Resin 2 (DCPD): "TD401" (Tg = 50.0°C), available from Zeon Corporation
Resin 3 (Hydrogenated DCPD): "SU210" (Tg = 58.6°C), available from Kolon Industries, Inc.
Resin 4 (Modified DCPD): "2940" (Tg = 82.0°C), available from Zeon Corporation
Resin 5 (Hydrogenated C9 resin): "ARKON P90" (Tg = 41.0°C), available from Arakawa Chemical Industries, Ltd.
Resin 6 (Hydrogenated C9 resin): "ARKON P115" (Tg = 66.0°C), available from Arakawa Chemical Industries, Ltd.

### [Production of Tire]

A rubber composition for inner liner was prepared using a rubber composition of each of the Examples and Comparative Examples.

The rubber composition for inner liner was wrapped around a molding drum; a carcass was stuck thereonto; other tire member was further stuck, to mold a green tire; and the green tire was vulcanized, thereby preparing a pneumatic tire having a size of (195/65R15) by the customary method.

### [Evaluation]

The vulcanized rubber and the tire were evaluated for gas barrier properties and low-temperature durability in the following manners. The low-temperature durability was evaluated from the viewpoint of low-temperature fracture properties and low-temperature fatigue properties.

A vulcanized rubber test piece used for the evaluation of gas barrier properties and low-temperature fracture properties was obtained by vulcanizing an unvulcanized test piece obtained through calendar molding of the rubber composition of each of the Examples and Comparative Examples under a condition at 145°C for 45 minutes. A thickness of the vulcanized rubber test piece for evaluation of gas barrier properties was set to 1 mm, and a thickness of the vulcanized test piece for evaluation of low-temperature fatigue properties was set to 2 mm.

### 1. Gas Barrier Properties

Using an air permeation tester M-C1 (available from Toyo Seiki Co., Ltd.), an air permeability of the vulcanized rubber test piece was measured at 60°C. The air permeability (JIS K6275-1 (2009)) was expressed in terms of an index while defining the air permeability of Comparative Example 1 as 100. It is meant that the smaller the index, the smaller the air permeability and the more favorable the gas barrier properties.

### 2. Low-Temperature Fracture Properties

The low-temperature fracture properties were evaluated in terms of an elongation at break (Eb) at -40°C.

Specifically, a sample prepared by processing a sheet of the vulcanized rubber having a thickness of 2 mm in a ring form and cooling to -40°C is drawn at a rate of 100 mm/min at -40°C; a length when the test piece is broken is measured; and the low-temperature fracture properties can be determined in terms of a length relative to the length (100%) before drawing.

### 3. Low-Temperature Fatigue Properties

The low-temperature fatigue properties were evaluated in terms of a crack propagation area at the time of repetitive fatigue at -30°C.

Specifically, a sheet of the vulcanized rubber having a thickness of 2 mm is processed in a strip form having a width of 6 mm, and pre-cracking is made to an extent of the width of 3 mm. The resulting sample was repetitively applied with an input at a strain of 10% and 2.8 Hz in an atmosphere at -30°C. A propagation area of the crack was divided by the input number, and the resulting numerical value was determined in terms of an index. It is meant that the larger the index, the more excellent the low-temperature fatigue properties.

**Table 1**

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Bromobutyl rubber | Parts | 100 | 100 | 100 | 100 | 100 | 100 | 100 |
| Filler A1 | Parts | 40 | 50 | 70 | 40 | 40 | 40 | 40 |
| Filler C1 | Parts | 0 | 0 | 0 | 0 | 5 | 0 | 0 |
| Filler B1 (CB) | Parts | 0 | 0 | 0 | 0 | 0 | 5 | 5 |
| Clay | Parts | 30 | 30 | 0 | 30 | 30 | 30 | 30 |
| Oil | Parts | 5 | 5 | 5 | 5 | 5 | 5 | 5 |
| Stearic acid | Parts | 2 | 2 | 2 | 2 | 2 | 2 | 2 |
| Zinc white | Parts | 2 | 2 | 2 | 2 | 2 | 2 | 2 |
| Vulcanization accelerator | Parts | 1 | 1 | 1 | 1 | 1 | 1 | 1 |
| Sulfur | Parts | 1 | 1 | 1 | 1 | 1 | 1 | 1 |
| Resin 1 (DCPD) | Parts | 0 | 0 | 0 | 15 | 15 | 0 | 0 |
| Resin 4 (modified DCPD) | Parts | 0 | 0 | 0 | 0 | 0 | 0 | 15 |
| Tg of Resins 1 to 6 | °C | - | - | - | 47.5 | 47.5 | - | 82.0 |
| Gas barrier properties (index) | - | 100 | 90 | 105 | 79 | 76 | 90 | 70 |
| Low-temperature fracture properties (elongation at break) | % | 476 | 451 | 436 | 359 | 344 | 466 | 218 |
| Low-temperature fatigue properties (low-temperature crack resistance) | Index | 100 | 108 | 103 | 120 | 117 | 102 | 95 |

**Table 2**

| | | Example 1 | Example 2 | Example 3 | Example 4 | Example 5 | Example 6 | Example 7 | Example 8 |
|---|---|---|---|---|---|---|---|---|---|
| Bromobutyl rubber | Parts | 100 | 100 | 100 | 100 | 100 | 100 | 100 | 100 |
| Filler A1 | Parts | 40 | 40 | 40 | 40 | 40 | 40 | 40 | 50 |
| Filler B1 (CB) | Parts | 5 | 5 | 5 | 10 | 0 | 5 | 5 | 5 |
| Filler B2 (silica) | Parts | 0 | 0 | 0 | 0 | 5 | 0 | 0 | 0 |
| Clay | Parts | 30 | 30 | 30 | 30 | 30 | 30 | 30 | 30 |
| Oil | Parts | 5 | 5 | 5 | 5 | 5 | 5 | 5 | 5 |
| Stearic acid | Parts | 2 | 2 | 2 | 2 | 2 | 2 | 2 | 2 |
| Zinc white | Parts | 2 | 2 | 2 | 2 | 2 | 2 | 2 | 2 |
| Vulcanization accelerator | Parts | 1 | 1 | 1 | 1 | 1 | 1 | 1 | 1 |
| Sulfur | Parts | 1 | 1 | 1 | 1 | 1 | 1 | 1 | 1 |
| Resin 1 (DCPD) | Parts | 15 | 0 | 0 | 15 | 15 | 0 | 0 | 15 |
| Resin 2 (DCPD) | Parts | 0 | 15 | 0 | 0 | 0 | 0 | 0 | 0 |
| Resin 3 (hydrogenated DCPD) | Parts | 0 | 0 | 15 | 0 | 0 | 0 | 0 | 0 |
| Resin 5 (hydrogenated C9 resin) | Parts | 0 | 0 | 0 | 0 | 0 | 15 | 0 | 0 |
| Resin 6 (hydrogenated C9 resin) | Parts | 0 | 0 | 0 | 0 | 0 | 0 | 15 | 0 |
| Tg of Resins 1 to 6 | °C | 47.5 | 50.0 | 58.6 | 47.5 | 47.5 | 41.0 | 66.0 | 47.5 |
| Gas barrier properties (index) | - | 70 | 60 | 62 | 65 | 69 | 70 | 66 | 65 |
| Low-temperature fracture properties (elongation at break) | % | 348 | 333 | 367 | 330 | 348 | 352 | 344 | 335 |
| Low-temperature fatigue properties (low-temperature crack resistance) | Index | 117 | 115 | 120 | 122 | 118 | 119 | 117 | 115 |

From Tables 1 and 2, it was noted that in the vulcanized rubbers obtained from the rubber compositions of Comparative Examples 1 to 3 and 6 not including the resin having a glass transition temperature of 41 to 75°C, the index of gas barrier properties is 90 or more, so that the gas barrier properties are not excellent, and the index of low-temperature fatigue properties is 110 or less, so that the low-temperature durability is not excellent.

In addition, it is noted that in the vulcanized rubber obtained from the rubber composition of Comparative Example 4 including the resin having a glass transition temperature of 41 to 75°C but not including two or more kinds of reinforcing fillers, the gas index of gas barrier properties is more than 75, so that the gas barrier properties are not excellent. Similarly, the vulcanized rubber obtained from rubber composition of Comparative Example 5 including the resin having a glass transition temperature of 41 to 75°C and carbon black having a nitrogen adsorption specific surface area of less than 50 m²/g but not including carbon black or silica having a nitrogen adsorption specific surface area of 100 m²/g or more, the index of gas barrier properties is more than 75, so that the gas barrier properties are not excellent.

In the vulcanized rubber obtained from the rubber composition of Comparative Example 7 including the resin having a glass transition temperature of higher than 75°C, though the gas barrier properties are excellent, the elongation at break is less than 330%, and the index of low-temperature fatigue properties is less than 100, so that the low-temperature durability is not excellent.

In contrast, in the vulcanized rubbers obtained from the rubber compositions of the Examples including the resin having glass transition temperature of 41 to 75°C, carbon black having a nitrogen adsorption specific surface area of less than 50 m²/g, and carbon black or silica having a nitrogen adsorption specific surface area of 100 m²/g or more, the index of gas barrier properties was 70 or less, and the index of low-temperature fatigue properties was more than 110, so that both the gas barrier properties and the low-temperature durability were excellent.

## Claims

1. A rubber composition comprising
a rubber component,
a reinforcing filler containing a reinforcing filler A and a reinforcing filler B,
a layered or platy mineral having an aspect ratio of 3 to 30, and
a resin having a glass transition temperature of 41 to 75°C, wherein
the reinforcing filler A is carbon black having a nitrogen adsorption specific surface area of less than 50 m²/g, and the reinforcing filler B is carbon black having a nitrogen adsorption specific surface area of 100 m²/g or more or silica having a nitrogen adsorption specific surface area of 100 m²/g or more.

2. The rubber composition according to claim 1, wherein the rubber component contains 80% by mass or more of a modified or unmodified butyl rubber.

3. The rubber composition according to claim 1 or 2, wherein the resin is at least one selected from the group consisting of a dicyclopentadiene-based resin and a hydrogenated C9-based resin.

4. The rubber composition according to any one of claims 1 to 3, wherein as a vulcanized rubber characteristic, an elongation at break at -40°C is 330% or more.

5. An inner liner rubber, which is obtained from the rubber composition according to any one of claims 1 to 4.

6. A tire comprising the inner liner rubber according to claim 5.
